# EUROPEAN PATENT SPECIFICATION

(11) **EP 4 206 278 B1**
(45) Date of publication and mention of the grant of the patent: **16.10.2024**
(21) Application number: 21861257.0
(22) Date of filing: 12.08.2021
(51) Int. Cl.: C08L 27/06, B32B 27/12, B32B 27/30, B32B 27/32, B32B 27/34, B32B 27/36, B32B 27/40, C08J 5/18, C08K 3/013, C08K 3/26, C08K 5/12, C08L 63/00

(54) **LAMINATED SHEET USING A POLYVINYL CHLORIDE RESIN SHEET**
LAMINIERTE FOLIE UNTER VERWENDUNG EINER POLYVINYLCHLORIDHARZFOLIE
FEUILLE STRATIFIÉE UTILISANT UNE FEUILLE DE RÉSINE DE POLYCHLORURE DE VINYLE

(30) Priority: 25.08.2020 JP 2020141838
(43) Date of publication of application: 05.07.2023
(60) Divisional application: 24170396.6
(73) Proprietor: Denka Company Limited, Tokyo 103-8338 (JP)
(72) Inventor: MIURA, Manabu, Tokyo 103-8338 (JP); YOSHIMURA, Daisuke, Tokyo 103-8338 (JP); TATE, Yosuke, Tokyo 103-8338 (JP)
(74) Representative: Murgitroyd & Company
(86) International application number: PCT/JP2021/029739
(87) International publication number: WO 2022/044829

(56) References cited:
- EP-A1- 2 604 652
- EP-A1- 3 272 570
- CN-A- 108 456 372
- JP-A- H07 268 159
- JP-A- H07 268 159

## Description

### TECHNICAL FIELD

The present invention relates to a laminated sheet using a polyvinyl chloride resin sheet.

### BACKGROUND

Non-woven fabrics created using short fibers of resins such as polyethylene terephthalate (PET) are used in a wide range of fields such as cushion materials, ceiling materials, flooring materials, automobile interior materials, and protective materials in sheets for bundling of electrical wiring (Patent Documents 1 and 2). By using a non-woven fabric, not only is it possible to impart designability or pleasant tactility to a material, but the capacity for soundproofing/sound absorption, vibration suppression, and impact protection can also be imparted. Furthermore, sheets wherein a resin has been laminated on a non-woven fabric (for example, Patent Document 3) have excellent strength as well as excellent wear resistance, waterproofness and dust resistance.

These laminated sheets are often used in construction members such as wall materials, flooring materials, and ceiling materials for housing or buildings and interior materials for automobiles. Alongside the shift to electric cars and hybrids in the automobile industry in recent years, there has been a need for the shrinking and slimming of components disposed within vehicles. With regard to this, for example, a sheet-like wiring member wherein a linear transmission member, a resin sheet, and a non-woven fabric are laminated by welding is presented as a thin component for bundling electrical wiring (Patent Document 4). According to Patent Document 4, from the viewpoints of protective performance, flexibility, and welding with the linear transmission member, a polyvinyl chloride-based resin comprising a plasticizer is used for the resin sheet.

Further the disclosures of JP H07 268159 A, EP 3 272 570 A1 and EP 2 604 652 A1 may be helpful for understanding the present invention.

JP H07 268159 A refers to a vinyl chloride resin composition produced by compounding a vinyl chloride resin with a trimellitate-based plasticizer and then with a polyester-type plasticizer, giving a molded product having high light resistance as well as heat-resistance and being useful as a laminate for automotive interior trims, etc. The vinyl chloride resin composition comprises 100 parts by weight of a vinyl chloride resin mixed with 20 to 200 parts by weight of a trimellitate plasticizer and further mixed with 1 to 50 parts by weight of a polyester plasticizer.

EP 3 272 570 A1 discloses a laminate for automotive interior material which includes a vinyl chloride resin layer and a tape, where no mark appears at a portion where the tape is laminated even when the laminate is lined with a foamed polyurethane layer and heated. The disclosed laminate for automotive interior material includes a vinyl chloride resin layer and a tape disposed on one side in a thickness direction of the vinyl chloride resin layer, wherein the tape includes a substrate having a porous structure and an adhesive layer, and wherein the adhesive layer is positioned closer to the vinyl chloride resin layer than the substrate.

EP 2 604 652 A1 discloses a vinyl chloride resin composition for powder molding containing 100 parts by mass of (a) a vinyl chloride resin, 65 to 105 parts by mass of (b) a specific trimellitate plasticizer, and 10 to 50 parts by mass of (c) a specific diester phthalate plasticizer. A mixture ratio of (c) the specific diester phthalate plasticizer to whole plasticizers is in a range of 5 to 50 percent by mass.

### CITATION LIST

### PATENT LITERATURE

Patent Document 1: JP 5915759 B
Patent Document 2: JP 2018-161918 A
Patent Document 3: JP 2012-056245 A
Patent Document 4: JP 2020-024787 A

### SUMMARY OF THE INVENTION

### TECHNICAL PROBLEM

In addition to, for example, dry lamination methods, thermal lamination methods, and extrusion lamination methods, ultrasonic welding methods and the like described in Patent Document 4 are known as methods for welding a polyvinyl chloride-based resin sheet and a sheet-like base material such as a non-woven fabric to create a laminated sheet. Among the above, methods other than dry lamination methods have the economic advantage of it being possible to directly weld the polyvinyl chloride-based resin sheet and the sheet-like base material. However, all of these methods require the polyvinyl chloride resin sheet to be heated to a molten state, so decomposition or carbonization of the polyvinyl chloride resin readily occurs. Therefore, favorable weldability and high thermal stability are demanded of polyvinyl chloride resin sheets that are for the purpose of obtaining such laminated sheets.

Thus, the present invention addresses the problem of providing a laminated sheet using a polyvinyl chloride resin sheet having favorable weldability and high thermal stability.

### SOLUTION TO PROBLEM

With respect to the abovementioned problem, as the result of diligent investigation by the present inventors, it was found that a polyvinyl chloride resin sheet capable of solving all the aforementioned problems is obtained by blending a trimellitic acid-based plasticizer, a phthalic acid-based plasticizer, and a hydrotalcite-based compound with a polyvinyl chloride resin at specific ratios, arriving at the present invention.

Thus the present invention refers to a laminated sheet according to claim 1. Advantageous embodiments may include features of depending claims.

### EFFECTS OF INVENTION

According to the present invention, a polyvinyl chloride resin sheet and a laminated sheet having favorable weldability and high thermal stability can be provided.

### BRIEF DESCRIPTION OF DRAWINGS

Fig. 1 is a cross section representing one aspect of the laminated sheet of the present invention.
Fig. 2 is a cross section representing another aspect of the laminated sheet of the present invention.
Fig. 3 is an explanatory drawing showing the state of a test piece when the weld strength of the laminated sheet is measured in the examples.

### DESCRIPTION OF EMBODIMENTS

The present invention shall be explained in detail below, but the present invention is not limited to the following aspects.

### [Polyvinyl Chloride Resin Sheet]

The polyvinyl chloride resin sheet of the present invention comprises a polyvinyl chloride resin and, with respect to 100 parts by mass of the polyvinyl chloride resin, 40-70 parts by mass of a trimellitic acid ester-based plasticizer, 1-35 parts by mass of a phthalic acid ester-based plasticizer, and 0.5-15 parts by mass of a hydrotalcite-based compound. Such polyvinyl chloride resin sheets have favorable weldability and high thermal stability.

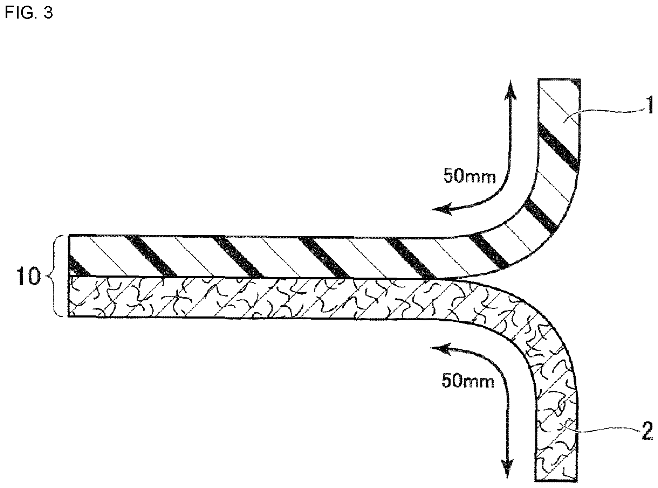

In the present specification, "having favorable weldability" means having excellent welding properties and sufficient weld strength when made into a laminated sheet. "Welding properties" means the capacity for poor welds between the sheet-like base material and the polyvinyl chloride resin sheet not to readily occur and for wrinkles not to readily occur on the surface of the polyvinyl chloride resin sheet. Further, "weld strength" is one index indicating the welding state between the polyvinyl chloride resin sheet and the sheet-like base material. For example, the highest load value being sufficiently high when the polyvinyl chloride resin sheet and the sheet-like base material are peeled in the test method shown in Fig. 3.

### (Polyvinyl Chloride Resin)

Polyvinyl chloride resins include, for example, vinyl chloride homopolymers (hereafter described as "polyvinyl chlorides"), vinyl chloride-vinyl acetate copolymers, vinyl chloride-ethylene copolymers, vinyl chloride-propylene copolymers, etc. These may be used singly or used in a combination of two or more. Among these, polyvinyl chlorides are preferable because they have excellent strength and excellent wear resistance, waterproofness, and dust resistance.

The average degree of polymerization of the polyvinyl chloride resin is not particularly limited so long as the resin has the effects of the present invention. In one aspect, the average degree of polymerization is preferably 400-4000, more preferably 500-2800, and especially preferably 700-2300 from the viewpoint of making the processability of the polyvinyl chloride resin sheet favorable. The average degree of polymerization is a value measured in accordance with JIS K 6720-2.

### (Trimellitic Acid Ester-based Plasticizer)

The polyvinyl chloride resin sheet of the present invention comprises a trimellitic acid ester-based plasticizer. The high thermal stability of the polyvinyl chloride resin is maintained due to the polyvinyl chloride resin sheet of the present invention comprising the trimellitic acid ester-based plasticizer. Further, high thermal resistance which can withstand use in high-temperature environments can also be imparted.

The amount of the trimellitic acid ester-based plasticizer to be blended is 40-70 parts by mass, preferably 43-68 parts by mass, more preferably 45-65 parts by mass, and especially preferably 47-63 parts by mass with respect to 100 parts by mass of the polyvinyl chloride resin. If the blending amount of the trimellitic acid ester-based plasticizer is higher than the abovementioned lower limit, weldability with a sheet-like base material such as a non-woven fabric becomes favorable. Further, poor welds between the polyvinyl chloride resin sheet and the sheet-like base material do not occur and the weld strength does not decrease when laminating the sheet-like base material. Moreover, if the blending amount is lower than the abovementioned upper limit, wrinkles on the polyvinyl chloride resin sheet do not occur and a uniform laminated sheet is obtained when laminating the sheet-like base material.

Trimellitic acid ester-based plasticizers include, for example, triester compounds of 1,2,4-benzenetricarboxylic acid and alcohols with a carbon number of 4-13, etc. Among these, triester compounds of 1,2,4-benzenetricarboxylic acid and alcohols with a carbon number of 8-10 are especially preferable from the viewpoints of compatibility with the polyvinyl chloride and plasticizing efficiency. Examples of such compounds include tris(2-ethylhexyl) trimellitate, tri-n-octyl trimellitate, triisooctyl trimellitate, tri-n-nonyl trimellitate, triisononyl trimellitate, tri-n-decyl trimellitate, triisodecyl trimellitate, etc. Among these, comprising at least one compound selected from tris(2-ethylhexyl) trimellitate, tri-n-octyl trimellitate, and triisononyl trimellitate, which have an excellent balance between thermal stability and high plasticizing efficiency on the polyvinyl chloride resin, as the trimellitic acid ester-based plasticizer is preferable and comprising tri-n-octyl trimellitate is still more preferable. These plasticizers may be used singly or used in a combination of two or more.

### (Phthalic Acid Ester-based Plasticizer)

The polyvinyl chloride resin sheet of the present invention comprises a phthalic acid ester-based plasticizer. Favorable weldability can be imparted to the polyvinyl chloride resin sheet by including a phthalic acid ester-based plasticizer. Further, flexibility can be efficiently imparted to the polyvinyl chloride resin sheet and the tactile sensation is not readily lost when made into a laminated sheet.

The amount of the phthalic acid ester-based plasticizer to be blended is 1-35 parts by mass, preferably 5-30 parts by mass, and more preferably 7-25 parts by mass with respect to 100 parts by mass of the polyvinyl chloride resin. If the blending amount of the phthalic acid ester-based plasticizer is higher than the abovementioned lower limit, weldability with a sheet-like base material such as a non-woven fabric becomes favorable. Further, poor welds between the polyvinyl chloride resin sheet and the sheet-like base material do not occur and the weld strength does not decrease when laminating the sheet-like base material. Moreover, if the blending amount is lower than the abovementioned upper limit, wrinkles on the polyvinyl chloride resin sheet do not occur and a uniform laminated sheet is obtained when laminating the sheet-like base material.

Phthalic acid ester-based plasticizers include, for example, isophthalic acid esters, terephthalic acid esters and polyesters thereof. Specifically, there are diisononyl phthalate (DINP), diheptyl phthalate (DHP), di-2-ethylhexyl phthalate (DEHP), di-n-octyl diphthalate (n-DOP), diisodecyl phthalate (DIDP), di-2-ethylhexyl isophthalate (DOIP), di-2-ethylhexyl isophthalate (DOIP), di-2-ethylhexyl terephthalate (DOTP), benzyl butyl phthalate (BBP), phthalic acid-propylene glycol-based polyesters, etc. Among these, it is preferable that the phthalic acid ester-based plasticizer be a diester compound of 1,2-benzenedicarboxylic acid (phthalic acid) and an alcohol with a carbon number of 4-13 and especially preferable that the phthalic acid ester-based plasticizer be a diester compound of 1,2-benzenedicarboxylic acid and an alcohol with a carbon number of 8-10 from the viewpoints of compatibility with the polyvinyl chloride and plasticizing efficiency. Examples of such compounds include di-2-ethylhexyl phthalate, di-n-octyl phthalate, diisooctyl phthalate, di-n-nonyl phthalate, diisononyl phthalate, di-n-decyl phthalate, diisodecyl phthalate, etc. Among these, comprising at least one compound selected from di-2-ethylhexyl phthalate and diisononyl phthalate as the phthalic acid ester-based plasticizer is preferable due to the excellent balance between thermal stability and high plasticizing efficiency on the polyvinyl chloride resin and comprising diisononyl phthalate is more preferable. These phthalic acid ester-based plasticizers may be used singly or used in a combination of two or more

### (Hydrotalcite-based Compound)

The polyvinyl chloride resin sheet of the present invention comprises a hydrotalcite-based compound. The hydrotalcite-based compound can function as a stabilizer for the polyvinyl chloride resin. That is, due to the polyvinyl chloride resin sheet of the present invention comprising a specific amount of a hydrotalcite-based compound, the thermal stability of the polyvinyl chloride resin improves.

The amount of the hydrotalcite-based compound to be blended is 0.5-15 parts by mass, preferably 0.7-13 parts by mass, and more preferably 1-10 parts by mass with respect to 100 parts by mass of the polyvinyl chloride resin.

Hydrotalcite-based compounds are inorganic compounds comprising a divalent metal ion (M²⁺), a trivalent metal ion (M³⁺), a hydroxide ion (OH⁻), and an n-valent anion (Aⁿ⁻) and, for example, a compound represented by general formula (1) below can be used.

(1) ... (M²⁺)_{X}(M³⁺)_{Y}(OH⁻)_{Z}(Aⁿ⁻)_{2/n} · mH₂O

In general formula (1), X is preferably 3 or greater and 8 or less, Y is preferably 1 or greater and 4 or less, Z is preferably 8 or greater and 16 or less, m is preferably 1 or greater and 6 or less, and n is preferably 1 or greater and 4 or less. These hydrotalcite-based compounds may be used singly or used in a combination of two or more

In general formula (1), the divalent metal ion (M²⁺) includes, for example, alkali earth elements, transition metal elements and group 12 elements. Among these, magnesium ions, calcium ions, iron ions, cobalt ions, nickel ions, copper ions, and zinc ions are preferable and comprising at least one metal ion selected from a magnesium ion (Mg²⁺), a calcium ion (Ca²⁺), and a zinc ion (Zn²⁺) is more preferable. (M²⁺) may be one ion alone or a combination of two or more ions.

The trivalent metal ion (M³⁺) includes, for example, group 13 elements, transition metal elements and group 3 elements. Specifically, aluminum ions, trivalent iron ions, trivalent cobalt ions, trivalent chromium ions, trivalent manganese ions, and scandium ions are preferable and comprising an aluminum ion (Al³⁺) is more preferable. (M³⁺) may be one ion alone or a combination of two or more ions.

The n-valent anion (Aⁿ⁻) includes, for example, monovalent halogen ions, divalent group 16 element ions, inorganic acid ions that are at least monovalent, organic acid ions that are at least monovalent, etc. Specifically, F⁻, Cl⁻, Br⁻, I⁻, NO₂⁻, NO₃⁻, ClO₄⁻, CO₃²⁻, SiO₃²⁻, SO₄²⁻, CH₃COO⁻, C₆H₅COO⁻, C₂H₂(COO)₂²⁻, O²⁻, S²⁻, Se²⁻, Te²⁻, PO₄³⁻, and BO₃³⁻ are preferable and comprising a carbonic acid ion (CO₃²⁻) is more preferable. (Aⁿ⁻) may be one ion alone or a combination of two or more ions.

### (Other Additives)

Other additives can be blended into the polyvinyl chloride resin sheet of the present invention so long as the effects thereof are not hindered.

Other additives include, for example, plasticizers other than the plasticizers discussed above (hereafter described as "other plasticizers"), inorganic fillers, modifiers, dispersants, colorants, light absorbers, lubricants, anti-blocking agents and anti-static agents.

For example, adipic acid esters and polyesters thereof, phosphoric acid-based plasticizers, epoxy-based plasticizers and chlorinated paraffins can be used as other plasticizers.

Adipic acid esters and polyesters thereof include, for example, di-2-ethylhexyl adipate (DOA), diisodecyl adipate, benzyl octyl adipate (BOA), adipic acid-propylene glycol-based polyesters and adipic acid-butylene glycol-based polyesters.

Phosphoric acid-based plasticizers include, for example, diphenylcresyl phosphate (DPCP) and tricresyl phosphate (TCP).

Epoxy-based plasticizers include, for example, epoxidized soybean oil and epoxidized linseed oil.

The abovementioned other additives may be used singly or used in a combination of two or more.

In one aspect, among the abovementioned other plasticizers, comprising an epoxy-based plasticizer is preferable and comprising epoxidized soybean oil is more preferable from the viewpoint of enhancing thermal stability of the polyvinyl chloride resin. The amount of the other plasticizer to be blended is preferably 1-10 parts by mass and more preferably 2-8 parts by mass with respect to 100 parts by mass of the polyvinyl chloride resin.

When the polyvinyl chloride resin sheet is laminated with a sheet-like base material, there are cases of the resin sheet sticking to a laminating roll or the like and the apparatus being stained. From the viewpoint of preventing such contamination, an inorganic filler may be blended with the polyvinyl chloride resin sheet of the present invention

Inorganic fillers include, for example, aluminum hydroxide, magnesium hydroxide, zirconium hydroxide, calcium hydroxide, potassium hydroxide, barium hydroxide, ammonium polyphosphate, amide polyphosphate, zirconium oxide, magnesium oxide, zinc oxide, titanium oxide, molybdenum oxide, guanidine phosphate, smectites, zinc borate, anhydrous zinc borate, zinc metaborate, barium metaborate, antimony oxide, antimony trioxide, antimony pentaoxide, red phosphorus, talc, kaolin, clay, alumina, silica, boehmite, bentonite, sodium silicate, calcium silicate, calcium sulfate, calcium carbonate, magnesium carbonate and carbon black. These may be used singly or used in a combination of two or more. Among these, from the viewpoint of preventing contamination of rolls without impairing the various physical properties of the polyvinyl chloride resin, comprising calcium carbonate as the inorganic filler is preferable. The amount of the inorganic filler to be blended is preferably 0-50 parts by mass, more preferably 1-35 parts by mass, and still more preferably 15-35 parts by mass with respect to 100 parts by mass of the polyvinyl chloride resin. When calcium carbonate is included as the inorganic filler, the amount thereof to be blended is preferably 1-35 parts by mass, more preferably 3-30 parts by mass, and still more preferably 5-25 parts by mass with respect to 100 parts by mass of the polyvinyl chloride resin.

Modifiers include, for example, polyethylene chloride, ethylene-vinyl acetate copolymers, acrylonitrile-butadiene-styrene copolymers, methyl methacrylate-butadiene-styrene copolymers and methacrylate-butyl acrylate copolymers.

These may be used singly or used in a combination of two or more.

When an additive other than the abovementioned other plasticizers, inorganic fillers, and modifiers is added, the amount thereof blended is not particularly limited so long as the effects of the present invention are not hindered. For example, greater than 0 parts by mass and 10 parts by mass or less of the additive with respect to 100 parts by mass of the polyvinyl chloride resin can be blended.

From the viewpoint of making the processability when forming a sheet or the weldability when laminating with a sheet-like base material more favorable, the polyvinyl chloride resin sheet of the present invention preferably has a specific dynamic viscoelasticity.

In one aspect, in measurement of the tensile dynamic viscoelasticity with a frequency of 1 Hz and a strain of 1%, the maximum value of the loss tangent (tan δ) in the temperature range of -40°C to 120°C in the polyvinyl chloride resin sheet is preferably 1.0 or less and more preferably 0.5 or less. If the maximum value of the loss tangent within the abovementioned temperature range is 1.0 or less, the polyvinyl chloride resin sheet sticking to the apparatus when the sheet is heated in order to be laminated with a sheet-like base material is readily suppressed.

Further, in measurement of the tensile dynamic viscoelasticity with a frequency of 1 Hz and a strain of 1%, the storage elastic modulus at 120°C is preferably 1.0 × 10³ to 1.0 × 10⁶ Pa and more preferably 2.0 × 10³ to 5.0 × 10⁵ Pa. Due to the storage elastic modulus being in this range, the polyvinyl chloride resin sheet does not readily peel from the sheet-like base material in a process for cooling the laminated sheet.

In one aspect, it is preferable that the sheet has a maximum value of the loss tangent (tan δ) in measurement of the tensile dynamic viscoelasticity with a frequency of 1 Hz and a strain of 1% in the temperature range of -30°C to 30°C and that the maximum value be 1.0 or less. Further, the abovementioned temperature range is more preferably -30°C to 20°C and still more preferably -30°C to 10°C. Moreover, the maximum value of the loss tangent is more preferably 0.5 or less. Due to the maximum value of the loss tangent being within the abovementioned temperature range, both strength and flexibility of the polyvinyl chloride resin sheet can readily be established.

### [Manufacturing Method for the Polyvinyl Chloride Resin Sheet]

Manufacturing methods for the polyvinyl chloride resin sheet of the present invention include, for example, methods wherein following blending and melt-kneading of the aforementioned polyvinyl chloride resin, trimellitic acid ester-based plasticizer, phthalic acid ester-based plasticizer, hydrotalcite-based compound, and, as necessary, other additives, a film is made in a shape with a predetermined thickness, width, and length. While the melt-kneading method is not particularly limited so long as the sheet has the effects of the present invention, various mixers and kneaders equipped with a heating device such as, for example, twin-screw extruders, continuous and batch kneaders, rolls, and Banbury mixers can be used. A composition in which the raw materials have been uniformly dispersed by the abovementioned methods can be made into a film in a sheet-like shape by common methods such as, for example, calender methods, T-die methods, and inflation methods.

The thickness of the polyvinyl chloride resin sheet is preferably 0.01-1.00 mm, more preferably 0.05-0.75 mm, and still more preferably 0.10-0.50 mm.

The polyvinyl chloride resin sheet may be constituted by one layer or may have a multilayer structure of two or more layers.

### [Laminated Sheet]

The laminated sheet of the present invention has the aforementioned polyvinyl chloride resin sheet and a sheet-liko base material laminated to at least one surface of the polyvinyl chloride resin sheet.

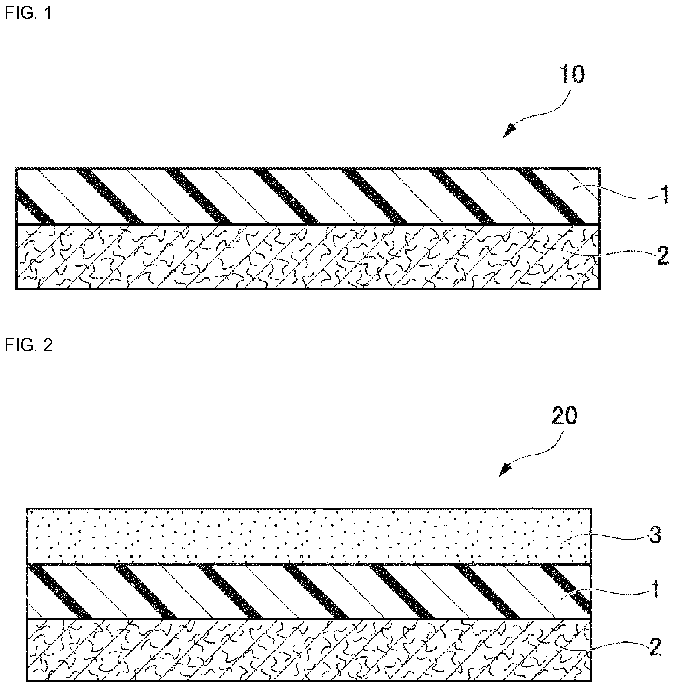

Fig. 1 is a cross section representing one aspect of the laminated sheet of the present invention. Laminated sheet 10 in Fig.1 has a configuration wherein sheet-like base material 2 is laminated on one surface of polyvinyl chloride resin sheet 1. The sheet-like base material 2 in Fig. 1 is constituted by a porous base material that shall be discussed below

### (Sheet-like Base Material)

In one aspect, the sheet-like base material is preferably a porous base material with a porosity of 30 volume percent or greater and more preferably 50 volume percent or greater. The porous base material includes, for example, wood pulp, natural fibers such as cotton or linen, Japanese paper, crepe paper, craft paper, woven fabrics and non-woven fabrics. Among these, non-woven fabrics are preferable because they have excellent soundproofing, sound absorption, vibration suppression and impact protection.

Non-woven fabrics comprising at least one fiber such as a polyester, a polyamide, a polyurethane and a polyolefin can be used as the non-woven fabric. Specifically, the fibers constituting the non-woven fabric can be selected from polyethylene terephthalate, polybutylene terephthalate, 6,6-nylon, 6-nylon, high-density polyethylene (HDPE), linear low-density polyethylene (LLDPE), polypropylene (PP), and ethylene-propylene copolymers. Among these, non-woven fabrics comprising polyester fibers are more preferable from the viewpoints of weldability with the polyvinyl chloride resin sheet and thermal resistance.

The thickness of the sheet-like base material is not particularly limited and can be made, for example, 100-1000 µm, preferably 200-600 µm. When a non-woven fabric is selected as the sheet-like base material, the fabric weight of the non-woven fabric is preferably 50-500 g/m² and more preferably 100-300 g/cm². Further, the thickness of the non-woven fabric can be made the range of the thickness of the previously discussed sheet-like base material.

Moreover, the sheet-like base material may be constituted by one layer or may have a multilayer structure of two or more layers.

### (Welded Layer)

The laminated sheet of the present invention preferably has a welded layer in which a portion of the polyvinyl chloride resin sheet is welded to a surface of the sheet-like base material. That is, the welded layer is preferably formed between the polyvinyl chloride resin sheet and the sheet-like base material. By having such a welded layer, weldability between the polyvinyl chloride resin sheet and the sheet-like base material (preferably a non-woven fabric) readily becomes favorable. In one aspect, the thickness of the welded layer is preferably 0.005-0.1 mm and more preferably 0.01-0.05 mm. The thickness of the welded layer can be measured by observing a cross section of the laminated sheet with a microscope.

### (Adhesive Layer)

The laminated sheet of the present invention may have an adhesive layer. The position of the adhesive layer is not particularly limited so long as the sheet has the effects of the present invention and the adhesive layer may be positioned anywhere. By having the adhesive layer, the laminated sheet can be more easily attached without the use of a specialized processing machine or jig.

Fig. 2 is a cross section representing another aspect of the laminated sheet of the present invention. Laminated sheet 20 in Fig. 2 has a configuration wherein sheet-like base material 2 is laminated on one surface of polyvinyl chloride resin sheet 1 and adhesive layer 3 is laminated on the other surface.

The adhesive constituting the adhesive layer is not particularly limited so long as the present invention maintains its effects and rubber-based adhesives, acrylic adhesives and thermoplastic olefin-based adhesives. can be used.

Rubber-based adhesives include, for example, adhesives wherein a synthetic rubber such as a styrene-butadiene rubber or a natural rubber has been blended.

Acrylic adhesives include, for example, adhesives having an acrylic polymer such as 2-ethylhexyl acrylate as the main component.

Thermoplastic olefin-based adhesives include, for example, adhesives wherein a styrene-isoprene-styrene copolymer has been blended.

When the laminated sheet of the present invention has an adhesive layer, the thickness of the adhesive layer is preferably 5-50 µm and more preferably 10-40 µm.

### [Manufacturing Method of the Laminated Sheet]

The laminated sheet of the present invention can be manufactured by publicly known methods. Specifically, dry lamination methods, thermal lamination methods, extrusion lamination methods and ultrasonic welding methods can be used. Among these, thermal lamination methods, extrusion lamination methods, and ultrasonic welding methods are preferable because the polyvinyl chloride resin sheet and the sheet-like base material can be directly laminated.

The surface temperature of the polyvinyl chloride resin sheet when the polyvinyl chloride resin sheet and the sheet-like base material are laminated is preferably 160-220°C and more preferably 180-200°C. Because the polyvinyl chloride resin sheet of the present invention has favorable weldability and high thermal stability, decomposition and carbonization of the polyvinyl chloride resin sheet do not occur, even when the sheet is heated to temperatures as discussed previously.

### [Application]

As discussed previously, the polyvinyl chloride resin sheet and the laminated sheet of the present invention can be suitably used in affixing electrical wiring in the field of construction and electrical wiring in the field of automobiles. Additionally, these can be used in walls, underflooring, ceilings, and attics in housing, as the back sides of interior spaces in automobiles, as wall surfaces of vehicle bodies.

Further, in the laminated sheet of the present invention, a sheet using a non-woven fabric as the sheet-like base material is provided with the soundproofing, sound absorption, vibration suppression, and impact protection performance that the non-woven fabric possesses and the strength, wear resistance, waterproofness, and dust resistance that the polyvinyl chloride resin sheet possesses. Therefore, the sheet can be used for applications in which these capabilities are desired.

Furthermore, when the laminated sheet of the present invention is a sheet comprising an adhesive layer, in the abovementioned electrical wiring application, the electrical wiring can be affixed by the adhesive layer without using a specialized processing machine or jig and the sheet can be affixed to a plane such as a wall material.

The laminated sheet of the invention may be used for protecting electrical wiring using a laminated sheet comprising the polyvinyl chloride resin sheet of the present invention. Specifically, this is a method for affixing a combination of electrical wiring which is wired in a target shape and a laminated sheet to a plane such as a wall surface, underflooring, a ceiling, or an attic such that the wiring is on the inside. Methods to affix the laminated sheet to the plane include methods by means of adhesion using an adhesive layer, methods for fusing and sealing each wall material or each flooring material by heating and methods for physically affixing using an anchoring material.

More preferable aspects of the present invention are as follows.

A polyvinyl chloride resin sheet comprising polyvinyl chloride with an average degree of polymerization of 400-4000 and, with respect to 100 parts by mass of the polyvinyl chloride, 40-70 parts by mass of a trimellitic acid ester-based plasticizer, 1-35 parts by mass of a phthalic acid ester-based plasticizer, and 0.5-15 parts by mass of a hydrotalcite-based compound represented by general formula (1) below, wherein the trimellitic acid ester-based plasticizer comprises at least one selected from tri-n-octyl trimellitate, triisononyl trimellitate, and tris(2-ethylhexyl) trimellitate and the phthalic acid ester-based plasticizer comprises at least one selected from diisononyl phthalate and bis(2-ethylhexyl) phthalate.

(1) ... (M²⁺)_{X}(M³⁺)_{Y}(OH⁻)_{Z}(Aⁿ⁻)_{2/n} · mH₂O

(In general formula (1), X is 3 or greater and 8 or less, Y is 1 or greater and 4 or less, Z is 8 or greater and 16 or less, m is 1 or greater and 6 or less, and n is 1 or greater and 4 or less. Further, (M²⁺) represents a magnesium ion, a calcium ion, an iron ion, a cobalt ion, a nickel ion, a copper ion, or a zinc ion, (M³⁺) represents an aluminum ion, a trivalent iron ion, a trivalent cobalt ion, a trivalent chromium ion, a trivalent manganese ion, or a scandium ion, (Aⁿ⁻) represents a monovalent halogen ion, a divalent group 16 element ion, an at least monovalent inorganic acid ion, or an at least monovalent organic acid ion, specifically F⁻, Cl⁻, Br⁻, I⁻, NO₂⁻, NO₃⁻, ClO₄⁻, CO₃²⁻, SiO₃²⁻, SO₄²⁻, CH₃COO⁻, C₆H₅COO⁻, C₂H₂(COO)₂²⁻, O²⁻, S²⁻, Se²⁻, Te²⁻, PO₄³⁻, and BO₃³⁻.)

A laminated sheet having the polyvinyl chloride resin sheet and a porous base material comprising a non-woven fabric.

### EXAMPLES

The present invention is explained in detail using examples below, but the present invention is not limited by the following descriptions.

### [Example 1]

### (Creation of Polyvinyl Chloride Resin Sheet)

Resin pellets were formed by blending 55 parts by mass of tri-n-octyl trimellitate, 5 parts by mass of diisononyl phthalate, 15 parts by mass of calcium carbonate, 2 parts by mass of epoxidized soybean oil, and 4 parts by mass of a hydrotalcite-based compound with 100 parts by mass of polyvinyl chloride (average degree of polymerization: 1000) and melt-kneading the mixture using a 40 mm ø pellet extruder (manufactured by TANABE PLASTICS MACHINERY CO., LTD.). Then, the pellets were molded into a sheet-like shape at a resin temperature of 190°C with a 65 mm ø T-die extruder (manufactured by Marth Seiki CO., LTD.) and a polyvinyl chloride resin sheet with a thickness of 0.30 mm was obtained. The measurements shown below were performed on the obtained polyvinyl chloride resin sheet.

### <Specific Gravity>

A test piece of the polyvinyl chloride resin sheet was created and the specific gravity was measured with a method conforming to JIS Z 8807 using a specific gravity bottle.

### <Dynamic Viscoelasticity>

The polyvinyl chloride resin sheet was cut into a 1 cm × 5 cm test piece and the storage elastic modulus, loss elastic modulus, and temperature dependency of the loss tangent (tan δ) were measured under the following conditions with a dynamic viscoelasticity apparatus "RSA-3" (manufactured by Toyo Seiki Seisaku-sho, Ltd.) in tensile test mode.
Measurement temperature range: -50°C to 150°C, rate of temperature increase: 4°C/minute
Frequency: 1 Hz, strain: 1%
The storage elastic modulus at 120°C, the maximum value of the loss tangent (tan δ), and the temperature for the maximum value of the loss tangent were calculated from the obtained dynamic viscoelasticity chart.

### (Creation of Laminated Sheet)

The polyvinyl chloride resin sheet obtained in Example 1 was cut to a width of 300 mm, superimposed on a non-woven fabric with a width of 300 mm constituted by polyester fibers (made from polyethylene terephthalate), and then thermally welded under the following conditions to obtain a laminated sheet. The non-woven fabric that was used had a fabric weight of 100 g/m² and a porosity of 67 volume percent.
Device used: thermal laminator (product name: "550 mm Small Laminator Apparatus", manufactured by SUN ENGINEERING Co., Ltd)
Heating method: double-sided roll heating (electric heating)
Roll material: silicon rubber (polyvinyl chloride resin sheet side), metal (non-woven fabric side)
Roll temperature: 200°C (polyvinyl chloride resin sheet side), 240°C (non-woven fabric side)
Heating roll nip pressure: 0.5 MPa (gauge pressure), line speed: 1 m/minute

The device discussed above was operated for one hour and a laminated sheet with a width of 300 mm and a length of 60 m was created. The laminated sheet was cut into lengths of one meter each and 60 sheet samples were created. The thickness of the laminated layer was measured using one of these sheet samples. Further, the weldability (welding properties and weld strength) of the laminated sheet and thermal stability of the laminated sheet were evaluated with the following methods.

### <Thickness of Welded Layer>

A cross section of the sheet sample was observed with a microscope (manufactured by Olympus Corporation) and the thickness of the layer in which the polyvinyl chloride resin sheet and the non-woven fabric are integrated was measured.

### <Evaluation of Welding Properties>

The welding state between the polyvinyl chloride resin sheet and the non-woven fabric sheet in the sheet samples created as described above was observed visually and evaluation of poor welding and wrinkles was performed. Specifically, the number of sheets without poor welding or wrinkles were recorded and the welding properties were evaluated according to the following evaluation criteria. Further, those with a "B Evaluation" or greater were considered to have passed. A sample in a state where, when the sheet sample is observed visually, a non-welded portion is partially present between the two layers (portion where the one layer and the other layer are not welded) is deemed to be one where "there is poor welding".

### (Evaluation Criteria for Poor Welding)

A: There was no poor welding in any of the sheet samples.
B: There were two or fewer sheet samples in which poor welding was present.
C: There were three or more sheet samples in which poor welding was present.

### (Evaluation Criteria for Wrinkles)

A: There were no wrinkles in any of the sheet samples.
B: There were two or fewer sheet samples in which wrinkles were present.
C: There were three or more sheet samples in which wrinkles were present.

### <Evaluation of Weld Strength>

A test piece with a length of 150 mm × a width of 10 mm was cut from the sheet sample. An incision was made in the welded layer on the cross section of the test piece with a knife and 100 mm of the test piece was left in the vertical direction and 50 mm of each of the sheet-like base material and the polyvinyl chloride resin sheet were peeled.

Then, the sheet-like base material and the polyvinyl chloride resin sheet were each bent 90° as shown in Fig. 3 to create a measurement sample.

The peeled polyvinyl chloride resin sheet and the non-woven fabric of the measurement sample were each gripped with a chuck and, in a state where the angle between the sheet and the non-woven fabric is 180°, a peeling test was performed with a precision universal tester AUTOGRAPH AGX-V (manufactured by Shimadzu Corporation). The measurement conditions at this time were a temperature of 23±2°C and a relative humidity of 50±10%. With the maximum load (N/10 mm) in the peeling test as the weld strength, the arithmetic mean value of five measurements was evaluated. Further, those with a "B Evaluation" or greater were considered to have passed.

### (Evaluation Criteria)

A: The maximum load was greater than 28 N/10 mm.
B: The maximum load was 18 N/10 mm or greater and 28 N/10 mm or less.
C: The maximum load was less than 18 N/10 mm.

### <Evaluation of Thermal Stability>

A test piece with a length of 150 mm × a width of 10 mm was cut from the sheet sample, heated at 120°C in an oven for 168 hours, and then cooled to 23°C. The state of the polyvinyl chloride resin sheet in the laminated sheet after cooling was observed visually and evaluated according to the following evaluation criteria.

### (Evaluation Criteria)

Passed: Neither significant hardening or embrittlement of the polyvinyl chloride resin sheet occurred and neither poor welding with the non-woven fabric or wrinkling occurred.

Failed: One of significant hardening or embrittlement of the polyvinyl chloride resin sheet and poor welding with the non-woven fabric or wrinkling occurred.

Furthermore, staining of the device during creation of the laminated sheet was evaluated with the following method.

### <Device Staining>

The aforementioned device was run for one hour and the heat-laminator roll and the laminated sheet each observed visually. The time at which staining of the roll began to occur and the time at which the staining began to be transferred to and stain the laminated sheet were recorded. Further, evaluation was made according to the evaluation criteria below and the device staining evaluated. Moreover, those with a "B Evaluation" or greater were considered to have passed.
A: Neither roll staining nor staining of the laminated sheet occurred within one hour.
B: Roll staining occurred within one hour, but staining of the laminated sheet did not occur.
C: Roll staining occurred and furthermore, the staining was transferred to the laminated sheet, staining the sheet, within one hour.

### [Examples 2-22 and 27]

Other than the polyvinyl chloride resin sheet of Example 1 having the blends shown in Tables 1-3 and the thicknesses of the sheets being as described in Tables 1-3, the polyvinyl chloride resin sheets and laminated sheets were created with the same methods as in Example 1. Further, evaluations of the weldability, thermal stability, and device staining were performed with the same methods as in Example 1. The results are shown in Tables 1-3.

### [Example 23]

A rubber-based adhesive was applied to the surface of the polyvinyl chloride resin sheet (the surface on the side on which the non-woven fabric was not laminated) in the laminated sheet in Example 1 and an adhesive layer with a thickness of 20 µm was formed to obtain a laminated sheet. Evaluations of the weldability, thermal stability, and device staining of the obtained laminated sheet were performed with the same methods as in Example 1. The results are shown in Table 3.

### [Example 24]

Other than the sheet-like base material in the laminated sheet of Example 1 having been changed to a non-woven fabric that has a fabric weight of 100 g/m² and a porosity of 67 volume percent and comprises a polyamide fiber (6,6-nylon), the laminated sheet was created with the same method as in Example 1. Evaluations of the weldability, thermal stability, and device staining of the obtained laminated sheet were performed with the same methods as in Example 1. The results are shown in Table 3.

### [Example 25]

Other than the sheet-like base material in the laminated sheet of Example 1 having been changed to a non-woven fabric that has a fabric weight of 100 g/m² and a porosity of 67% volume percent and comprises a polyurethane fiber (made from an ester-based polyurethane resin), the laminated sheet was created with the same method as in Example 1. Evaluations of the weldability, thermal stability, and device staining of the obtained laminated sheet were performed with the same methods as in Example 1. The results are shown in Table 3.

### [Example 26]

Other than the sheet-like base material in the laminated sheet of Example 1 having been changed to a non-woven fabric that has a fabric weight of 100 g/m² and a porosity of 67 volume percent and comprises a polyolefin fiber (made from a polypropylene resin), a laminated sheet was created with the same method as in Example 1. Evaluations of the weldability, thermal stability, and device staining of the obtained laminated sheet were performed with the same methods as in Example 1. The results are shown in Table 3.

### [Comparative Examples 1-7]

Other than the polyvinyl chloride resin sheet of Example 1 having the blends shown in Table 3 and the thicknesses of the sheets being as described in Table 3, the polyvinyl chloride resin sheets and laminated sheets were created with the same methods as in Example 1. Further, evaluations of the weldability, thermal stability, and device staining were performed with the same methods as in Example 1. The results are shown in Table 3.

The details of the raw materials described in Tables 1-3 are as follows.

### (Polyvinyl Chloride Resin)

Polyvinyl chloride resin 1: polyvinyl chloride (average degree of polymerization: 1000) (manufactured by TAIYO VINYL CORPORATION, product name: "TH-1000")
Polyvinyl chloride resin 2: polyvinyl chloride (average degree of polymerization: 1300) (manufactured by TAIYO VINYL CORPORATION, product name: "TH-1300")
Polyvinyl chloride resin 3: polyvinyl chloride (average degree of polymerization: 1700) (manufactured by TAIYO VINYL CORPORATION, product name: "TH-1700")
Polyvinyl chloride resin 4: polyvinyl chloride (average degree of polymerization: 2000) (manufactured by TAIYO VINYL CORPORATION, product name: "TH-2000")
Polyvinyl chloride resin 5: polyvinyl chloride (average degree of polymerization: 700) (manufactured by TAIYO VINYL CORPORATION, product name: "TH-700")

### (Trimellitic Acid Ester-based Plasticizer)

Tri-n-octyl trimellitate (Kao Corporation, product name: "TRIMEX^{®} New NSK")
Tris(2-ethylhexyl) trimellitate (manufactured by DIC CORPORATION, product name: "MONOCIZER^{®} W-700")
Triisononyl trimellitate (manufactured by ADEKA CORPORATION, product name: "C-9N")

### (Phthalic Acid Ester-based Plasticizer)

Diisononyl phthalate (manufactured by J-PLUS Co., Ltd., product name: "DINP")
Bis(2-ethylhexyl) phthalate (manufactured by J-PLUS Co., Ltd., product name: "DOP")

### (Hydrotalcite-based Compound)

Mg_{3.5}Zn_{0.5}Al₂(OH)₁₂(CO₃) · 3H₂O (manufactured by SAKAI CHEMICAL INDUSTRY CO., LTD., product name: "STABIACE^{®} HT-7")

### (Other Additives)

Inorganic filler: calcium carbonate (manufactured by Konoshima Chemical Co., Ltd., product name: "CALCEEDS^{®} P")
Other plasticizer: epoxidized soybean oil (manufactured by SANWAGOSEI CHEMICAL CO., LTD., product name; "SANSOCIZER SE-100")

In Table 3, the description "-" for the adhesive layer means that an adhesive layer was not provided.

**Table 1**

| | | | | | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 | EXAMPLE 10 | EXAMPLE 11 |
|---|---|---|---|---|---|---|---|---|---|---|---|---|---|---|---|
| | | POLYVINYL CHLORIDE RESIN 1 | | (PARTS BY MASS) | 100 | | | | | | | | | | |
| | | POLYVINYL CHLORIDE RESIN 2 | | | | 100 | | | | 100 | 100 | 100 | 100 | 100 | 100 |
| | | POLYVINYL CHLORIDE RESIN 3 | | | | | 100 | | | | | | | | |
| | | POLYVINYL CHLORIDE RESIN 4 | | | | | | 100 | | | | | | | |
| | | POLYVINYL CHLORIDE RESIN 5 | | | | | | | 100 | | | | | | |
| | | TRI-n-OCTYL TRIMELLITATE | | | 55 | 55 | 55 | 55 | 55 | | | 45 | 65 | 55 | 55 |
| | COMPOSITION | TRIISONONYL TRIMELLITATE | | | | | | | | 55 | | | | | |
| | | TRIS(2-ETHYLHEXYL) TRIMELLITATE | | | | | | | | | 55 | | | | |
| | | DIISONONYL PHTHALATE | | | 5 | 5 | 5 | 5 | 5 | 5 | 5 | 5 | 5 | 5 | 5 |
| POLYVINYL CHLORIDE RESIN SHEET | | BIS(2-ETHYLHEXYL) PHTHALATE | | | | | | | | | | | | | |
| | | HYDROTALCITE-BASED COMPOUND | | | 4 | 4 | 4 | 4 | 4 | 4 | 4 | 4 | 4 | 4 | 4 |
| | | OTHER PLASTICIZER | | | 2 | 2 | 2 | 2 | 2 | 2 | 2 | 2 | 2 | 2 | 2 |
| | | INORGANIC FILLER | | | 15 | 15 | 15 | 15 | 15 | 15 | 15 | 15 | 15 | 3 | 30 |
| | | SPECIFIC GRAVITY | | (g/cm³) | 1.33 | 1.33 | 1.33 | 1.33 | 1.33 | 1.33 | 1.33 | 1.34 | 1,31 | 1.23 | 1.43 |
| | | THICKNESS | | (mm) | 0.30 | 0.30 | 0.30 | 0.25 | 0.25 | 0.30 | 0.30 | 0.30 | 0.30 | 0.30 | 0.30 |
| | PHYSICAL PROPERTIES | BASIS WEIGHT | | (g/m²) | 0.40 | 0.40 | 0.40 | 0.33 | 0.33 | 0.40 | 0.40 | 0.40 | 0.39 | 0.37 | 0.43 |
| | | DYNAMIC VISCOELASTICITY | STORAGE ELASTIC MODULUS (120°C) | (Pa) | 3.5 × 10° | 6.8 × 10⁴ | 1.9 × 10⁵ | 3.9 × 10⁵ | 8.9 × 10³ | 8.9 × 10⁴ | 8.9 × 10⁴ | 9.0 × 10⁴ | 1.9 × 10⁴ | 4.4 × 10⁴ | 9.1 × 10⁴ |
| | | | MAXIMUM VALUE OF tan δ | (-) | 0.52 | 0.47 | 0.42 | 0.61 | 0.34 | 0.69 | 0.56 | 0.66 | 0.79 | 0.47 | 0.47 |
| | | | TEMPERATURE AT WHICH MAXIMUM VALUE OF tan δ APPEARS | (°C) | 18 | 15 | 12 | 22 | 12 | 24 | 21 | 25 | -10 | 15 | 15 |
| LAMINATED SHEET | COMPOSITION | SHEET-LIKE BASE MATERIAL | I NON-WOVEN FABRIC | (-) | POLYESTER FIBER | POLYESTER FIBER | POLYESTER FIBER | POLYESTER FIBER | POLYESTER FIBER | POLYESTER FIBER | POLYESTER FIBER | POLYESTER FIBER | POLYESTER FIBER | POLYESTER FIBER | POLYESTER' FIBER |
| | PHYSICAL PROPERTIES | THICKNESS OF WELDED LAYER | | (mm) | 0.054 | 0.048 | 0.045 | 0.038 | 0.038 | 0.039 | 0.042 | 0.036 | 0.065 | 0.045 | 0.045 |
| EVALUATION RESULTS | WELDABILITY | WELDING PROPERTIES | POOR WELDING | (-) | A | A | A | A | A | A | A | B | A | A | B |
| | | | WRINKLES | | A | A | A | A | B | A | A | A | B | A | A |
| | | WELD STRENGTH | MAXIMUM LOAD IN PEELING TEST | (N/10 mm | 29 | 28 | 28 | 18 | 35 | 26 | 26 | 25 | 44 | 25 | 26 |
| | | | EVALUATION RESULTS | (-) | A | A | A | B | A | A | B | B | A | B | B |
| | THERMAL STABILITY | | | (-) | PASSED | PASSED | PASSED | PASSED | PASSED | PASSED | PASSED | PASSED | PASSED | PASSED | PASSED |
| | DEVICE STAINING | | | (-) | A | A | A | A | A | A | B | A | B | A | A |

**Table 2**

| | | | | | EXAMPLE 12 | EXAMPLE 13 | EXAMPLE 14 | EXAMPLE 15 | EXAMPLE 16 | EXAMPLE 17 | EXAMPLE 18 | EXAMPLE 19 | EXAMPLE 20 | EXAMPLE 21 | EXAMPLE 22 |
|---|---|---|---|---|---|---|---|---|---|---|---|---|---|---|---|
| | | POLYVINYL CHLORIDE RESIN 1 | | (PARTS BY MASS) | | | | | | | | | | | |
| | | POLYVINYL CHLORIDE RESIN 2 | | | 100 | 100 | 100 | 100 | 100 | 100 | 100 | 100 | 100 | 100 | 100 |
| | | POLYVINYL CHLORIDE RESIN 3 | | | | | | | | | | | | | |
| | | POLYVINYL CHLORIDE RESIN 4 | | | | | | | | | | | | | |
| | | POLYVINYL CHLORIDE RESIN 5 | | | | | | | | | | | | | |
| | | TRI-n-OCTYL TRIMELLITATE | | | 55 | 55 | 55 | 55 | 55 | 55 | 55 | 55 | 55 | 55 | 55 |
| | COMPOSITION | TRIISONONYL TRIMELLITATE | | | | | | | | | | | | | |
| | | TRIS(2-ETHYLHEXYL) TRIMELLITATE | | | | | | | | | | | | | |
| | | DIISONONYL PHTHALATE | | | 15 | 30 | 2 | 5 | 5 | 5 | 5 | 15 | 15 | 5 | 5 |
| POLYVINYL CHLORIDE RESIN SHEET | | BIS(2-ETHYLHEXYL) PHTHALATE | | | | | | 0.1 | 0.5 | | | | | | |
| | | HYDROTALCITE-BASED COMPOUND | | | 4 | 4 | 4 | 4 | 4 | 4 | 4 | 12 | 0.8 | 4 | 4 |
| | | OTHER PLASTICIZER | | | 2 | 2 | 2 | 2 | 2 | 8 | 0 | 2 | 2 | 2 | 2 |
| | | INORGANIC FILLER | | | 10 | 10 | 10 | 10 | 10 | 10 | 10 | 15 | 15 | 10 | 10 |
| | | SPECIFIC GRAVITY | | (g/cm³) | 1.27 | 1.25 | 1.29 | 1.29 | 1.29 | 1.28 | 1.29 | 1.30 | 1.31 | 1.29 | 1.29 |
| | | THICKNESS | | (mm) | 0.30 | 0.30 | 0.30 | 0.30 | 0.30 | 0.30 | 0.30 | 0.25 | 0.25 | 0.15 | 0.45 |
| | PHYSICAL PROPERTIES | BASIS WEIGHT | | (g/m²) | 0.38 | 0.38 | 0.39 | 0.39 | 0.39 | 0.38 | 0.39 | 0.32 | 0.33 | 0.19 | 0.58 |
| | | DYNAMIC VISCOELASTICITY | STORAGE ELASTIC MODULUS (120°C) | (Pa) | 2.6 × 10⁴ | 8.1 × 10³ | 3.7 × 10⁵ | 4.9 × 10⁴ | 4.4 × 10⁴ | 4.9 × 10⁴ | 4.4 × 10⁴ | 5.1 × 104 | 4.4 × 10⁴ | 7.1 × 10⁴ | 7.5 × 10⁴ |
| | | | MAXIMUM VALUE OF tan δ | (-) | 0.35 | 0.28 | 0.25 | 0.47 | 0.49 | 0.47 | 0.49 | 0.47 | 0.46 | 0.47 | 0.47 |
| | | | TEMPERATURE AT WHICH MAXIMUM VALUE OF tan δ APPEARS | (°C) | 11 | 7 | 5 | 14 | 12 | 14 | 12 | 15 | 15 | 15 | 15 |
| LAMINATED SHEET | COMPOSITION | SHEET-LIKE BASE MATERIAL | NON-WOVEN FABRIC | (-) | POLYESTER FIBER | POLYESTER FIBER | POLYESTER FIBER | POLYESTER FIBER | POLYESTER FIBER | POLYESTER FIBER | POLYESTER FIBER | POLYESTER FIBER | POLYESTER FIBER | POLYESTER FIBER | POLYESTER' FIBER |
| | PHYSICAL PROPERTIES | THICKNESS OF WELDED LAYER | | (mm) | 0.051 | 0.060 | 0.060 | 0.054 | 0.060 | 0.054 | 0.060 | 0.038 | 0.040 | 0.023 | 0.068 |
| EVALUATION RESULTS | WELDABILITY | WELDING PROPERTIES | POOR WELDING | (-) | A | A | A | A | A | A | A | A | A | B | A |
| | | | WRINKLES | | A | A | A | A | A | A | A | A | A | A | B |
| | | WELD STRENGTH | MAXIMUM LOAD IN PEELING TEST | (N/10 mm | 28 | 28 | 29 | 28 | 30 | 28 | 30 | 30 | 18 | 23 | 41 |
| | | | EVALUATION RESULTS | (-) | A | A | A | A | A | A | A | A | B | B | A |
| | THERMAL STABILITY | | | (-) | PASSED | PASSED | PASSED | PASSED | PASSED | PASSED | PASSED | PASSED | PASSED | PASSED | PASSED |
| | DEVICE STAINING | | | (-) | A | A | A | A | A | B | A | B | A | A | A |

**Table 3**

| | | | | | EXAMPLE 23 | EXAMPLE 24 | EXAMPLE 25 | EXAMPLE 26 | EXAMPLE 27 | COMPARATIVE EXAMPLE 1 | COMPARATIVE EXAMPLE 2 | COMPARATIVE EXAMPLE 3 | COMPARATIVE EXAMPLE 4 | COMPARATIVE EXAMPLE 5 | COMPARATIVE EXAMPLE 6 | COMPARATIVE EXAMPLE 7 |
|---|---|---|---|---|---|---|---|---|---|---|---|---|---|---|---|---|
| | | POLYVINYL CHLORIDE RESIN 1 | | | 100 | 100 | 100 | 100 | 100 | | | | | | | |
| | | POLYVINYL CHLORIDE RESIN 2 | | | | | | | | 100 | 100 | 100 | 100 | 100 | 100 | 100 |
| | | POLYVINYL CHLORIDE RESIN 3 | | | | | | | | | | | | | | |
| | | POLYVINYL CHLORIDE RESIN 4 | | | | | | | | | | | | | | |
| | | POLYVINYL CHLORIDE RESIN 5 | | | | | | | | | | | | | | |
| | | TRI-n-OCTYL TRIMELLITATE | | | 55 | 55 | 55 | 55 | 55 | 75 | 35 | 55 | 55 | 15 | 55 | 55 |
| | COMPOSITION | TRIISONONYL TRIMELLITATE | | | | | | | | | | | | | | |
| | | TRIS(2-ETHYLHEXYL) TRIMELLITATE | | | | | | | | | | | | | | |
| | | DIISONONYL PHTHALATE | | (PARTS BY MASS) | 5 | 5 | 5 | 5 | 5 | 5 | 5 | 45 | 0 | 45 | 15 | 15 |
| POLYVINYL CHLORIDE RESIN SHEET | | BIS(2-ETHYLHEXYL) PHTHALATE | | | | | | | | | | | | | | |
| | | HYDRO TALClTE-BASED COMPOUND | | | 4 | 4 | 4 | 4 | 4 | 4 | 4 | 4 | 4 | 4 | 20 | 0.3 |
| | | OTHER PLASTICIZER | | | 2 | 2 | 2 | 2 | | 2 | 2 | 2 | 2 | 2 | 2 | 2 |
| | | INORGANIC FILLER | | | 15 | 15 | 15 | 15 | | 15 | 15 | 35 | 15 | 15 | 15 | 15 |
| | | SPECIFIC GRAVITY | | (g/cm³) | 1.33 | 1.33 | 1.33 | 1.33 | 1.28 | 1.29 | 1.36 | 1.38 | 1.34 | 1.33 | 130 | 1.31 |
| | | THICKNESS | | (mm) | 0.30 | 0.30 | 0.30 | 0.30 | 0.30 | 0.40 | 0.20 | 0.40 | 0.20 | 0.25 | 0.25 | 0.25 |
| | PHYSICAL PROPERTIES | BASIS WEIGHT | | (g/m²) | 0.40 | 0.40 | 0.40 | 0.40 | 0.38 | 0.52 | 0.27 | 0.55 | 0.27 | 0.33 | 0.32 | 0.33 |
| | | DYNAMIC VISCOELASTICITY | STORAGE ELASTIC MODULUS (120°C) | (Pa) | 3.5 × 10⁴ | 3.5 × 10⁴ | 3.5 × 10⁴ | 3.5 · 10⁴ | 1.4 × 10⁴ | 5.8 × 10³ | 4.9 × 10⁵ | 4.1 × 1Q³ | 2.7 × 10⁵ | 2.4 × 10⁴ | 5.1 × 10⁴ | 4.4 × 10⁴ |
| | | | MAXIMUM VALUE OF tan δ | (-) | 0.52 | 0.52 | 0.52 | 0.52 | 0.5 | 0.71 | 0.43 | 0.72 | 0.31 | 0.71 | 0.47 | 0.46 |
| | | | TEMPERATURE AT WHICH MAXIMUM VALUE OF tan δ APPEARS | (°C) | 18 | 18 | 18 | 18 | 15 | -16 | 21 | 33 | 12 | -23 | 15 | 15 |
| LAMINATED SHEET | COMPOSITION | SHEET-LIKE BASE MATERIAL | I NON-WOVEN FABRIC | (-) | POLYESTER FIBER | POLYAMIDE FIBER | POLYURETHANE FIBER | POLYOLEFIN FIBER | POLYESTER FIBER | POLYESTER FIBER | POLYESTER FIBER | POLYESTER FIBER | POLYESTER FIBER | POLYESTER FIBER | POLYESTER FIBER | POLYESTER FIBER |
| | | ADHESIVE LAYER | | | RUBBER-BASED ADHESIVE | - | - | - | - | - | - | - | - | - | - | - |
| | PHYSICAL PROPERTIES | THICKNESS OF ADHESIVE LAYER | | (um) | 20 | - | - | - | - | - | - | - | - | - | - | - |
| | | THICKNESS OF WELDED LAYER | | (mm) | 0.056 | 0.031 | 0.066 | 0.028 | 0.050 | 0.085 | 0.016 | 0.068 | 0.026 | 0.040 | 0.038 | DID NOT WELD |
| EVALUATION RESULTS | WELDABILITY | WELDING PROPERTIES | POOR WELDING | (-) | A | A | A | B | A | A | C | A | C | A | A | |
| | | | WRINKLES | | A | A | B | A | B | C | A | C | A | A | A | |
| | | WELD STRENGTH | MAXIMUM LOAD IN PEELING TEST | (N/10 mm | 28 | 24 | 33 | 19 | 30 | 39 | 13 | 35 | 17 | 28 | 20 | |
| | | | EVALUATION RESULTS | (-) | A | 8 | A | B | A | A | C | A | C | A | B | |
| | THERMAL STABILITY | | | (-) | PASSED | PASSED | PASSED | PASSED | PASSED | PASSED | PASSED | FAILED | PASSED | FAILED | PASSED | |
| | DEVICE STAINING | | | (-) | A | A | A | A | B | A | A | A | A | A | C | |

As shown in Tables 1-3, the laminated sheets in Examples 1-27, which comprise the polyvinyl chloride resin sheet of the present invention, had excellent weldability and excellent thermal stability. Meanwhile, the laminated sheets in Comparative Examples 1-6, which comprise polyvinyl chloride resin sheets which do not satisfy the configuration of the present invention, were inferior in either the capacity for weldability or thermal stability. Further, the polyvinyl chloride resin sheet in Comparative Example 7 thermally decomposed during welding, so the non-woven fabric and the polyvinyl chloride resin sheet did not weld and a laminated sheet was not able to be created. According to the foregoing results, the polyvinyl chloride resin sheet of the present invention and laminated sheets created using the same were confirmed to have favorable weldability and high thermal stability.

### REFERENCE SIGNS LIST

- 1: Polyvinyl chloride resin sheet
- 2: Sheet-like base material
- 3: Adhesive layer
- 10, 20: Laminated sheet

## Claims

1. A laminated sheet (10,20), wherein the laminated sheet (10,20) has
a polyvinyl chloride resin sheet (1) comprising a polyvinyl chloride resin and, with respect to 100 parts by mass of the polyvinyl chloride resin, 40-70 parts by mass of a trimellitic acid ester-based plasticizer, 1-35 parts by mass of a phthalic acid ester-based plasticizer, and 0.5-15 parts by mass of a hydrotalcite-based compound, and
a sheet-like base material (2) laminated to at least one surface of the polyvinyl chloride resin sheet (1),
wherein the sheet-like base material (2) comprises a non-woven fabric and the non-woven fabric comprises at least one fiber selected from polyesters, polyamides, polyurethanes, and polyolefins.

2. The laminated sheet (10, 20) according to claim 1, wherein the average degree of polymerization of the polyvinyl chloride resin measured in accordance with JIS K 6720-2 is 400-4000.

3. The laminated sheet (10,20) according to claim 1 or 2, wherein the polyvinyl chloride resin sheet (1) comprises 1-35 parts by mass of an inorganic filler with respect to 100 parts by mass of the polyvinyl chloride resin.

4. The laminated sheet (10,20) according to any one of claims 1 to 3, wherein the polyvinyl chloride resin sheet (1) comprises 1-10 parts by mass of an epoxy-based plasticizer with respect to 100 parts by mass of the polyvinyl chloride resin.

5. The laminated sheet (10,20) according to any one of claims 1 to 4, wherein, in measurement of the tensile dynamic viscoelasticity, the polyvinyl chloride resin sheet (1) has a maximum value of the loss tangent (tan δ) in the temperature range of -30°C to 30°C of 1.0 or less, wherein the measurement is conducted by
- cutting the polyvinyl chloride resin sheet (1) into a 1 cm × 5 cm test piece,
- measuring the storage elastic modulus, loss elastic modulus and temperature dependency of the loss tangent (tan δ) with a dynamic viscoelasticity apparatus in tensile test mode under the following conditions:
- measurement temperature range: -50°C to 150°C,
- rate of temperature increase: 4°C/minute,
- frequency: 1 Hz, and
- strain: 1%
and
- calculating the maximum value of the loss tangent (tan δ) from the obtained dynamic viscoelasticity chart.

6. The laminated sheet (10,20) according to any one of claims 1 to 5, wherein, in measurement of the tensile dynamic viscoelasticity, the polyvinyl chloride resin sheet (1) has a maximum value of the loss tangent (tan δ) in the temperature range of -40°C to 120°C of 1.0 or less and the storage elastic modulus at 120°C is from 1.0 × 10³ to 1.0 × 10⁶ Pa, wherein the measurement is conducted by
- cutting the polyvinyl chloride resin sheet (1) into a 1 cm × 5 cm test piece,
- measuring the storage elastic modulus, loss elastic modulus and temperature dependency of the loss tangent (tan δ) with a dynamic viscoelasticity apparatus in tensile test mode under the following conditions:
- measurement temperature range: -50°C to 150°C,
- rate of temperature increase: 4°C/minute,
- frequency: 1 Hz, and
- strain: 1%
and
- calculating the storage elastic modulus at 120°C and the maximum value of the loss tangent (tan δ) from the obtained dynamic viscoelasticity chart.

7. The laminated sheet (10,20) according to any one of claims 1 to 6, wherein the sheet thickness of the polyvinyl chloride resin sheet (1) is 0.01 to 1.00 mm.

8. The laminated sheet (10,20) according to any one of claims 1 - 7 further comprising an adhesive layer (3).

## Patentansprüche

1. Eine laminierte Folie (10, 20), wobei die laminierte Folie (10, 20) Folgendes aufweist:
eine Polyvinylchloridharzfolie (1), beinhaltend ein Polyvinylchloridharz und, bezogen auf 100 Masseteile des Polyvinylchloridharzes, 40-70 Masseteile eines trimellithsäureesterbasierten Weichmachers, 1-35 Masseteile eines phthalsäureesterbasierten Weichmachers und 0,5-15 Masseteile einer hydrotalcitbasierten Verbindung, und
ein folienartiges Basismaterial (2), das auf mindestens eine Oberfläche der Polyvinylchloridharzfolie (1) laminiert ist,
wobei das folienartige Basismaterial (2) einen Vliesstoff beinhaltet und der Vliesstoff mindestens eine Faser beinhaltet, die aus Polyestern, Polyamiden, Polyurethanen und Polyolefinen ausgewählt ist.

2. Laminierte Folie (10, 20) gemäß Anspruch 1, wobei der durchschnittliche Polymerisationsgrad des Polyvinylchloridharzes, gemessen in Übereinstimmung mit JIS K 6720-2, 400-4000 beträgt.

3. Laminierte Folie (10, 20) gemäß Anspruch 1 oder 2, wobei die Polyvinylchloridharzfolie (1) bezogen auf 100 Masseteile des Polyvinylchloridharzes 1-35 Masseteile eines anorganischen Füllstoffs beinhaltet.

4. Laminierte Folie (10, 20) gemäß einem der Ansprüche 1 bis 3, wobei die Polyvinylchloridharzfolie (1) bezogen auf 100 Masseteile des Polyvinylchloridharzes 1-10 Masseteile eines epoxidbasierten Weichmachers beinhaltet.

5. Laminierte Folie (10, 20) gemäß einem der Ansprüche 1 bis 4, wobei bei der Messung der dynamischen Zugviskoelastizität die Polyvinylchloridharzfolie (1) einen Maximalwert des Verlustfaktors (tan δ) im Temperaturbereich von -30 °C bis 30 °C von 1,0 oder weniger aufweist, wobei die Messung durch Folgendes durchgeführt wird:
- Schneiden der Polyvinylchloridharzfolie (1) zu einem Prüfstück der Größe 1 cm × 5 cm,
- Messen des Speicherelastizitätsmoduls, des Verlustelastizitätsmoduls und der Temperaturabhängigkeit des Verlustfaktors (tan δ) mit einer Vorrichtung für dynamische Viskoelastizität im Zugprüfmodus unter den folgenden Bedingungen:
- Messtemperaturbereich: -50 °C bis 150 °C,
- Temperaturanstiegsrate: 4 °C/Minute,
- Frequenz: 1 Hz und
- Dehnung:1 %
und
- Berechnen des Maximalwerts des Verlustfaktors (tan δ) aus dem erhaltenen Diagramm der dynamischen Viskoelastizität.

6. Laminierte Folie (10, 20) gemäß einem der Ansprüche 1 bis 5, wobei bei der Messung der dynamischen Zugviskoelastizität die Polyvinylchloridharzfolie (1) einen Maximalwert des Verlustfaktors (tan δ) im Temperaturbereich von -40 °C bis 120 °C von 1,0 oder weniger aufweist und wobei das Speicherelastizitätsmodul bei 120 °C 1,0 × 10³ bis 1,0 × 10⁶ Pa beträgt, wobei die Messung durch Folgendes durchgeführt wird:
- Schneiden der Polyvinylchloridharzfolie (1) zu einem Prüfstück der Größe 1 cm × 5 cm,
- Messen des Speicherelastizitätsmoduls, des Verlustelastizitätsmoduls und der Temperaturabhängigkeit des Verlustfaktors (tan δ) mit einer Vorrichtung für dynamische Viskoelastizität im Zugprüfmodus unter den folgenden Bedingungen:
- Messtemperaturbereich: -50 °C bis 150 °C,
- Temperaturanstiegsrate: 4 °C/Minute,
- Frequenz: 1 Hz und
- Dehnung:1 %
und
- Berechnen des Speicherelastizitätsmoduls bei 120 °C und des Maximalwerts des Verlustfaktors (tan δ) aus dem erhaltenen Diagramm der dynamischen Viskoelastizität.

7. Laminierte Folie (10, 20) gemäß einem der Ansprüche 1 bis 6, wobei die Foliendicke der Polyvinylchloridharzfolie (1) 0,01 bis 1,00 mm beträgt.

8. Laminierte Folie (10, 20) gemäß einem der Ansprüche 1-7, ferner beinhaltend eine Haftschicht (3).

## Revendications

1. Une feuille stratifiée (10, 20), où la feuille stratifiée (10, 20) a
une feuille de résine de polychlorure de vinyle (1) comprenant une résine de polychlorure de vinyle et, par rapport à 100 parties en masse de la résine de polychlorure de vinyle, 40-70 parties en masse d'un plastifiant à base d'ester d'acide trimellitique, 1-35 parties en masse d'un plastifiant à base d'ester d'acide phtalique, et 0,5-15 parties en masse d'un composé à base d'hydrotalcite, et
un matériau de base de type feuille (2) stratifié sur au moins une surface de la feuille de résine de polychlorure de vinyle (1),
où le matériau de base de type feuille (2) comprend une étoffe non tissée et l'étoffe non tissée comprend au moins une fibre sélectionnée parmi les polyesters, les polyamides, les polyuréthanes, et les polyoléfines.

2. La feuille stratifiée (10, 20) selon la revendication 1, où le degré moyen de polymérisation de la résine de polychlorure de vinyle mesuré conformément à JIS K 6720-2 est de 400-4 000.

3. La feuille stratifiée (10, 20) selon la revendication 1 ou la revendication 2, où la feuille de résine de polychlorure de vinyle (1) comprend 1-35 parties en masse d'une charge inorganique par rapport à 100 parties en masse de la résine de polychlorure de vinyle.

4. La feuille stratifiée (10, 20) selon l'une quelconque des revendications 1 à 3, où la feuille de résine de polychlorure de vinyle (1) comprend 1-10 parties en masse d'un plastifiant à base d'époxy par rapport à 100 parties en masse de la résine de polychlorure de vinyle.

5. La feuille stratifiée (10, 20) selon l'une quelconque des revendications 1 à 4, où, lors de la mesure de la viscoélasticité dynamique à la traction, la feuille de résine de polychlorure de vinyle (1) a une valeur maximale de la tangente de perte (tan δ) comprise dans la plage de température allant de -30 °C à 30 °C de 1,0 ou moins, où la mesure est réalisée
- en coupant la feuille de résine de polychlorure de vinyle (1) en une éprouvette de 1 cm × 5 cm,
- en mesurant le module élastique de conservation, le module élastique de perte et la dépendance à la température de la tangente de perte (tan δ) au moyen d'un appareil de viscoélasticité dynamique en mode d'essai à la traction dans les conditions suivantes :
- plage de température de mesure : de -50 °C à 150 °C,
- vitesse d'augmentation de température : 4 °C/minute,
- fréquence : 1 Hz, et
- déformation : 1 %
et
- en calculant la valeur maximale de la tangente de perte (tan δ) à partir du tableau de viscoélasticité dynamique obtenu.

6. La feuille stratifiée (10, 20) selon l'une quelconque des revendications 1 à 5, où, lors de la mesure de la viscoélasticité dynamique à la traction, la feuille de résine de polychlorure de vinyle (1) a une valeur maximale de la tangente de perte (tan δ) comprise dans la plage de température allant de -40 °C à 120 °C de 1,0 ou moins et le module élastique de conservation à 120 °C va de 1,0 × 10³ à 1,0 × 10⁶ Pa, où la mesure est réalisée
- en coupant la feuille de résine de polychlorure de vinyle (1) en une éprouvette de 1 cm × 5 cm,
- en mesurant le module élastique de conservation, le module élastique de perte et la dépendance à la température de la tangente de perte (tan δ) au moyen d'un appareil de viscoélasticité dynamique en mode d'essai à la traction dans les conditions suivantes :
- plage de température de mesure : de -50 °C à 150 °C,
- vitesse d'augmentation de température : 4 °C/minute,
- fréquence : 1 Hz, et
- déformation : 1 %
et
- en calculant le module élastique de conservation à 120 °C et la valeur maximale de la tangente de perte (tan δ) à partir du tableau de viscoélasticité dynamique obtenu.

7. La feuille stratifiée (10, 20) selon l'une quelconque des revendications 1 à 6, où l'épaisseur de feuille de la feuille de résine de polychlorure de vinyle (1) va de 0,01 à 1,00 mm.

8. La feuille stratifiée (10, 20) selon l'une quelconque des revendications 1-7 comprenant en outre une couche d'adhésif (3).
